# EUROPEAN PATENT SPECIFICATION

(11) **EP 3 281 682 B1**
(45) Date of publication and mention of the grant of the patent: **28.11.2018**
(21) Application number: 17183938.4
(22) Date of filing: 31.07.2017
(51) Int. Cl.: B01D 1/22, B01D 19/00, B01F 7/00, B01F 7/16, B01F 7/24, B65D 88/68

(54) **STORAGE TANK FOR IMPREGNATION RESINS**
LAGERUNGSBEHÄLTER FÜR IMPRÄGNIERHARZ
RÉSERVOIR DE STOCKAGE POUR LA RÉSINE POUR IMPRÉGNER

(30) Priority: 09.08.2016 IT 201600083988
(43) Date of publication of application: 14.02.2018
(73) Proprietor: Metech S.r.l., 33082 Azzano Decimo (PN) (IT)
(72) Inventor: VERARDO, Alan, 33170 Pordenone PN (IT); COMISINI, Angelantonio, 33080 Prata di Pordenone PN (IT)
(74) Representative: Giugni, Diego

(56) References cited:
- EP-A2- 0 448 766
- DE-A1- 3 241 108
- DE-U1- 7 613 332
- GB-A- 2 079 616
- JP-A- S57 127 431

## Description

### FIELD OF THE INVENTION

The present invention refers to an impregnation resins storage tank. In particular, present invention refers to storage tank for impregnation resins dedicated for instance for impregnation of electrical machines.

### STATE OF ART

In the field of electrical machine impregnation, different methods and technologies can be used to obtain the desired result, which is the coating of an electrical component, typically of electrical windings of conductor wires, through electro insulating resin.

In particular, electrical windings result to be sensitive to eventual small voids of resin which may cause short cuts, due to introduction of humidity and/or gasses which are trapped inside resin itself.

Within these technologies, it is well known the technology called VPI, English term for Vacuum Pressure Impregnation, that is to say impregnation by vacuum and pressure. This technology uses a process where vacuum and pressure are regulated to optimize the impregnation of resin.

A VPI system, used to obtain electrical machine impregnation, usually comprises an autoclave and a storage tank, connected each other through a conduit for resin transferring. The autoclave contains the electrical machine to impregnate.

Starting condition is the resin preparation inside the storage tank, meanwhile the resin conduit is kept closed. Following, vacuum is made inside autoclave, then the resin conduit is opened to allow resin flow from storage tank into autoclave, and let the resin impregnate the electrical machine, keeping vacuum inside residual volume of autoclave.

Pressure is applied on the resin inside autoclave for a period necessary for impregnation, keeping the conduit closed, in order to improve impregnation itself. Afterwards, resin is pushed back, i.e. from autoclave into the storage tank, in order to extract afterword the impregnated electrical machine and prepare the whole system for a further cycle.
The resin preparation inside the storage tank is a critical phase of the system for an optimized process and for reducing operational costs. In fact, before introducing resin into autoclave, the resin is to be introduced inside storage tank, deaerated and heated-up till the necessary temperature and maintained in desired state.

In particular, resin is to be maintained with proper optimized deaeration and thermoregulation processes to prevent aging effects, for reducing cost and for energy consumption.

The scope of deaeration is mainly to eliminate gass and/or humidity from the resin. The thermoregulation is needed to get the correct resin temperature. Through thermoregulation heating or cooling are balanced: for example, heating-up is required to get the correct resin viscosity for impregnation and cooling-down to preserve the resin.

In particular, a good thermoregulation allows to keep correct resin temperature, which is analyzed to reduce impregnation time cycle. Temperature homogeneity allows to obtain quality and repeatability.

For example, in US4391529 document, the system is focused mainly to obtain mixing result of many components, liquid and/or solid, which have to be correctly amalgamated and heated. Another similar example is given by DE3241108A1.

The deaeration process is obtained thanks to a thin film lamination system with resin capture form bottom through a inner central screw. The central screw conveys the resin inside a tube fixed to the storage tank walls. A lamination bell, conical shaped, is fixed to upper tube ends, so that when the central screw projects the resin to the upper part of the tube, thin film lamination is obtained for resin deaeration.

An "U" mixer is connected in the lower part of central screw. The mixer rotation covers the inner surface of storage tank bottom and a little lower portion of its walls.

The scope of such U mixer is to mix the components. The thermoregulation is obtained by heating elements placed around the external tank walls and internally on the fixed tube which contains the central screw. A motor drives the rotation of the central screw and consequently of the U mixer.

This system and other known systems as well, has a problem of thermal stratification inside the resin storage tank. It is not possible to obtain a uniform temperature of the whole resin volume, but areas with temperature close to desired value and areas with different temperatures are present. It appears consequently an undesired and uncontrolled thermal inertia of resin in specific areas of tank. Moreover, the thermal stratification grows with the storage tank capacity, with the result in difference of temperature within different areas of even 5°C.

Moreover, the deaeration results in being not very efficient and not quick.

### INVENTION SUMMARY

Main scope of present invention is to overcome inconveniences of known technology by inventing a storage tank for impregnation resins which allows more working flexibility and solves problems of known technology.

Regarding what above, one of the scope of present invention is to invent a storage tank for impregnation resins which allows to reduce the thermal stratification inside storage tank itself.

Another scope of present invention is to obtain the contemporaneous optimization of the two processes of deaeration and thermoregulation.

The aim and scopes above indicated and others emerging soon after, are reached thanks to a storage tank for impregnation resins as defined in the claim 1.

Surprisingly, as result of many experiments on field and in laboratory, it came out that deaeration by thin film lamination through central screw in vertical axis execution requires a rotation speed which is often different from what is necessary to have uniform thermoregulation.

In fact, to deaerate by thin film lamination, the resin flow to the exit window of tube on the lamination bell must be low. This results that an ideal change of total resin volume to obtain a proper resin movement to uniform temperature would require several ours. Moreover, the distribution of resin movement is surely not multidirectional, leaving areas with low mobility (stagnation) which may increase undesired thermal stratification.

Especially in storage with big dimensions with vertical axis execution, with big diameter, for example more than 2 mt. diameter and/or more than 2 mt. cylindrical part height, a thermal stratification is generated mainly between the layer close to the storage tank walls, in contact with heating external jacket, and the central layer, in contact with central deaerating screw. Moreover, an extra horizontal thermal stratification is generated. The eventual presence of heating elements around the central screw give only a slight improve, not enough to obtain advantageous process conditions.

A further scope is to integrate in one single device the deaeration and thermoregulation functionality, which are the essential processes for impregnation resins preparation in storage tank of high capacity, for example more than 10.000 liters, needed to impregnate for instance high voltage electrical machines, for example up to 20 kiloVolt (Kv); this to solve problems with thermal stratification emerging especially in such big storage tanks. Experimentally it was found that the importance of control of viscosity to get the best parameters for resin penetration and optimized cycles is greater for high voltage machines than for low voltage ones.

### BRIEF DESCRIPTION OF FIGURES

Further features and advantages of present invention will be more evident with following description of a particular, but not exclusive, embodiment given as example, not restricted, with reference to attached drawings wherein:
- figures 1 and 2A shows a schematic front view, respectively external and in section, of an impregnation resin storage tank, manufactured according to present invention;
- figure 2B shows a schematic axonometric view of an upper portion of a impregnation resin storage tank manufactured according to present invention, wherein an element is hidden to show the internal part of storage tank;
- figure 3 shows a schematic axonometric view of an element of a impregnation resin storage tank manufactured according to present invention;

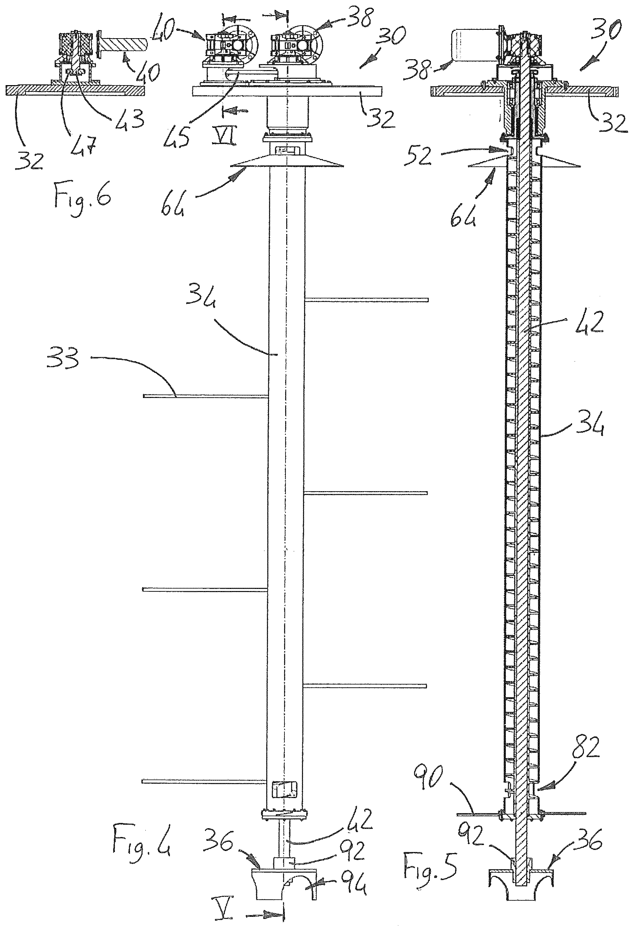

- figure 4, 5 and 6 shows respectively a front view of the element in figure 3 and two views in section as indicated in figure 4;
- figure 7 shows a detail of figure 5;
- figure 8 and 9 shows details respectively of figure 4 and 5.

### DETAILED DESCRIPTION OF THE INVENTION

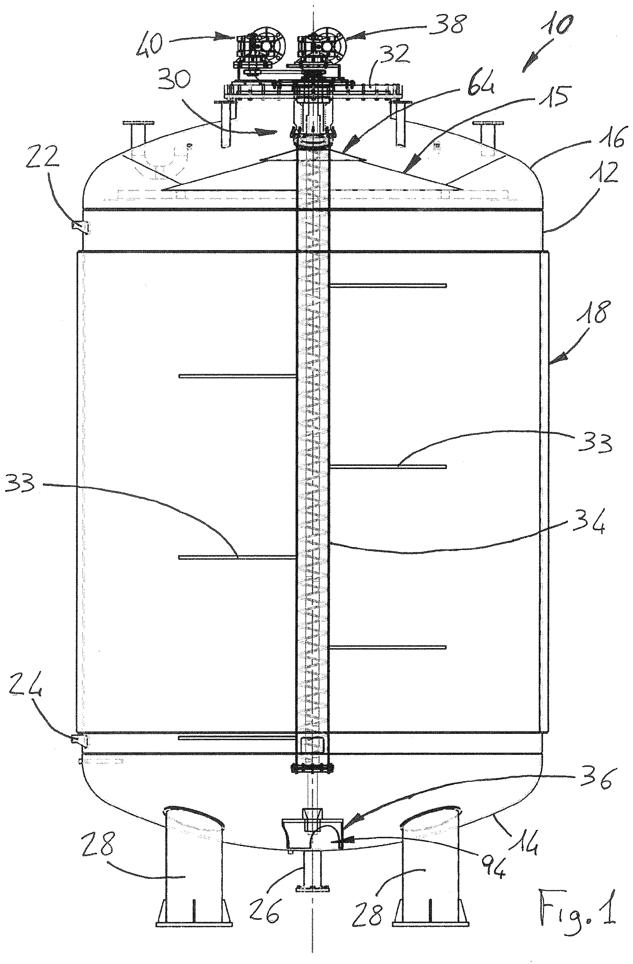

With reference to figure 1 and following, a impregnation resin storage tank manufactured according to present invention is generically indicated with number 10.

It is to be noticed that in the following description of the invention, terms referred to the position of any element or component as superior, inferior, upper, lower, right, left, vertical, horizontal and similar are to be intended as referred to objects in the standard condition of use and assembly. Therefore, even though the invention is not assembled and/or in use, a specialist is able to recognize the said elements.

The storage tank 10 comprises a cylindrical wall 12 which is closed at the inferior end by a bottom 14 and at the superior end by a bottom 16, forming a container.

Close to the superior bottom 16, the tank 10 further comprises a first bell 64 and a second bell 15. The second bell 15 is preferably connected to the inner surface of superior bottom 16, following described.

The wall 12 is surrounded by an external jacket 18, which defines a channel 20 which runs the external surface of the wall 12 as a spiral.

A maximum resin level sensor 22 and a minimum resin level sensor 24 are placed on external jacket 18.

Channel 20 is in contact with external part of the jacket 18 through an upper muff and a lower muff, both not visible in the figure, to allow circulation of a primary fluid, useful for heating or cooling purpose of wall 12 and consequently of the resin stored in tank 10. Primary fluid can be water, glicole or others.

Bottom 14 is equipped with a conduit 26 in contact with internal part of tank 10, in order to allow resin passage toward autoclave or other devices. The bottom 14 has several legs 28 in touch with floor, not visible in figure, to bear the tank 10.

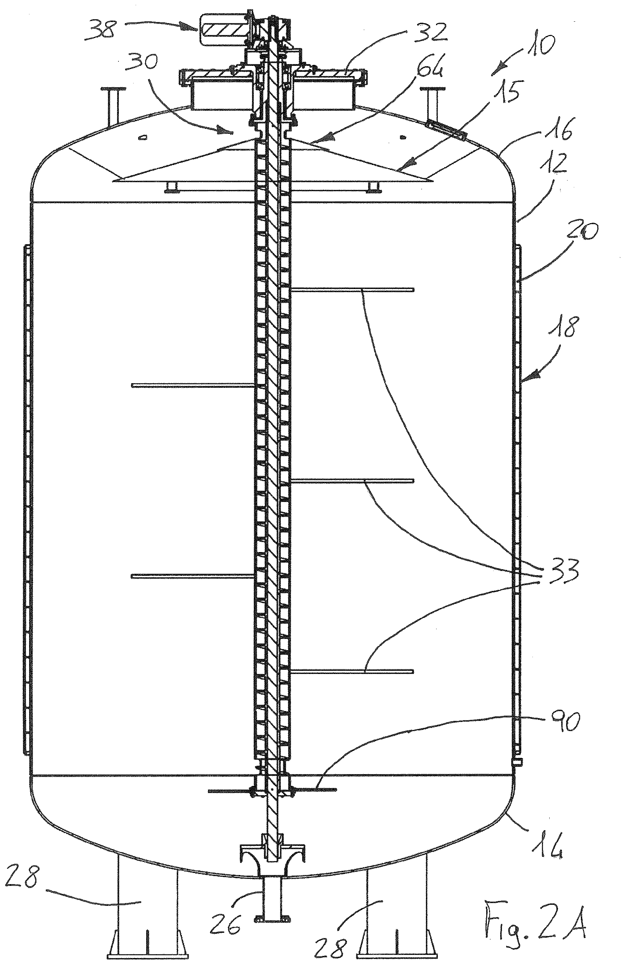

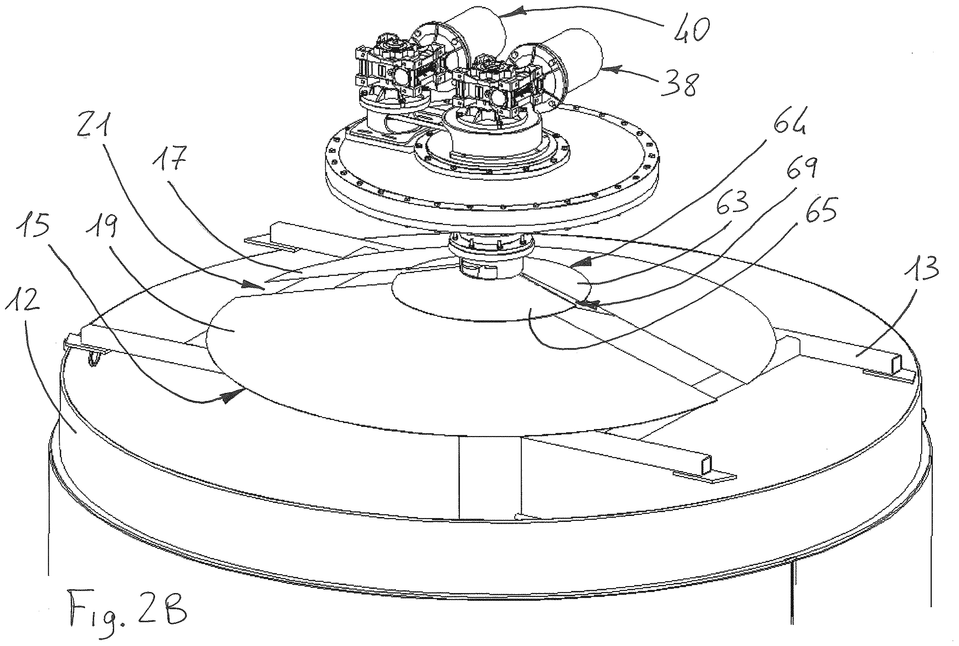

As visible in figure 2B, the first bell 64 includes a first sector 63 and a second sector 65, spaced one from the other of a fixed distance 69 according to circumference. In the same way, the second bell 15 comprises a first sector 17 and a second sector 19, spaced one from the other of a fixed distance 21 according to circumference.

The second bell 15 is connected to tank 10 by a frame 13, which frame is in turn connected to superior bottom 16. This last element not visible in figure.

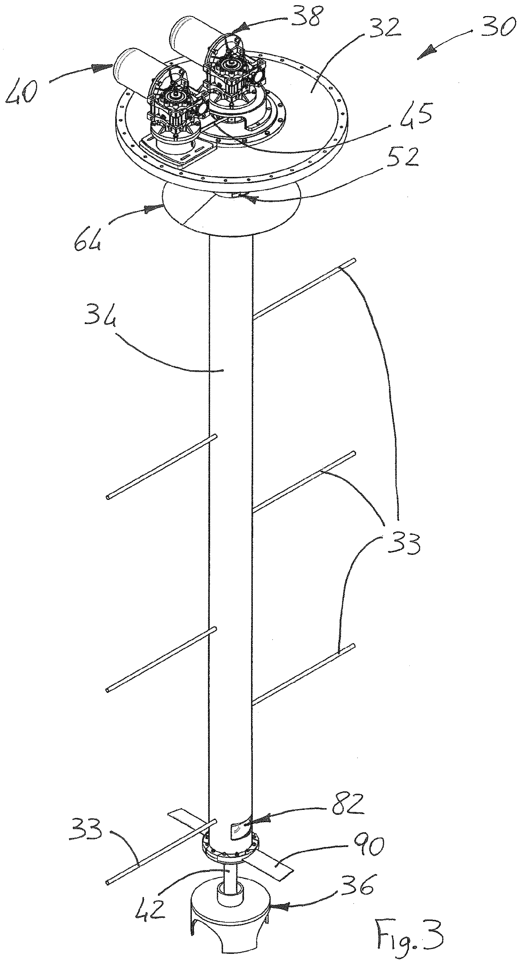

The specific shape of the first bell 64 and/or of the second bell 15 allows to have a bigger surface of the resin thin film which is created by resin fall and consequently a better deaeration. A column 30 is placed in correspondence of a dedicated opening of superior bottom 16, as visible in figure 3. The column 30 includes a first flange 32, a tube 34 and a terminal 36.

A plurality of blades 33 lean out from tube 34. These blades are properly placed alternately substantially along the whole height of tube 34. In other words, the blades 33 lean out from tube 34 at different height, preferably any of them being oriented in the opposite direction respect the following one.

Obviously, the useful effect of blades 33 is obtainable also with just one blade, being advantageously better with two blades and even better with a plurality of blades 33 placed along the whole height of tube 34. Preferably, two or more blades 33 are placed radially opposite and staggered along the whole height of tube 34.

The alternate disposition of blades 33 advantageously facilitates the assembly of column 30 when it is inserted from upper opening of superior bottom 16. Having the column 30 laterally oscillated, it is possible to insert one blade 33 by the other.

Blades 33 represented in figure are substantially cylindrical shaped, but it is well known that an expert in the field can use different shapes to optimize the resin mixing. That is to say that blades 33 are shaped to obtain uniform thermoregulation. Each blade 33 can be designed to have a proper inclination, orientation and/or profile to obtain a uniform distribution of temperature. For example the configuration of each blade 33 can be determined in relation with specific resin, preferably as a function of viscosity of the said resin.

Advantageously, by splitting the second bell 15 in sectors, it results a synergic effect, since it allows also to facilitate the assembly of storage tank, since blades 33 can go through the fixed space 21 above descripted. That is to say, with reference to figure 2B, when the second bell 15 is connected to frame 13 and consequently to superior bottom 16, it is possible to insert column 30 inside the tank 10, having blades 33 passed between first sector 17 and second sector 19 of bell 15.

Rotation means are mounted on first flange 32. These means include a first gear motor 38 and a second gearmotor 40. First gearmotor 38 is associated to a shaft 42 to drive its rotation. Shaft 42 runs the column 30 from top to bottom till terminal 36, passing inside tube 34, as described afterwards. The second gearmotor 40 is associated to a second shaft 43 and to a second pulley 47.

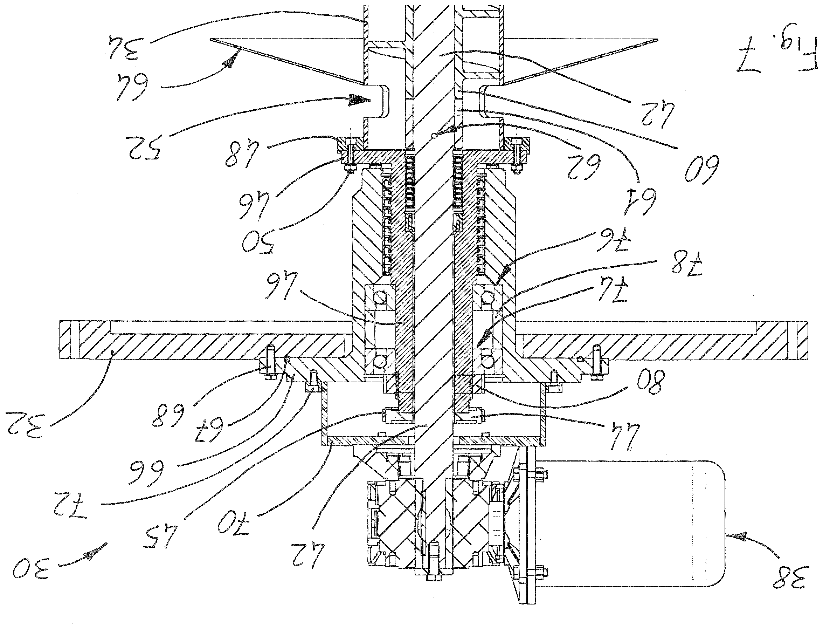

With reference to figure 7, the upper portion of column 30 is described, including its components. Shaft 42 is surrounded by a first pulley 44 and a sleeve 46. Inferior end of such sleeve 46 is associated to superior end of tube 34 by means of a ring 48. Ring 48 is associated to sleeve 46 by removable means 50, for example bolts. Around the first pulley 44 is placed a belt 45. Belt 45 is placed also around a second pulley 47 to obtain a belt-pulley transmission.

Near the superior edge of tube 34 there is an upper mouth 52, having the shape of two through holes made in the wall of tube 34, preferably provided in two circular sectors, each sector with angle less than 90°. Preferably, the two holes are symmetrically faced, with respect to the symmetry axis of the tube 34.

First lamination bell 64, conical shaped, leans out from tube 34. This bell leans out downward from tube 34. Advantageously, the first bell 64 leans out from tube 34 below upper mouth 52.

Advantageously, the rotations of first pulley 44, of sleeve 46, of tube 34, of ring 48 and of the first bell 64 are linked together via proper linking means, in order to be coupled in rotation. Moreover, said components are not coupled with rotation of shaft 42, in order to rotate independently from rotation of shaft 42. The first pulley 44, sleeve 46 and ring 48 are placed around shaft 42, in series from top to bottom and are coupled in rotation.

A screw 60 surrounds shaft 42. Moreover, screw 60 is preferably linked in rotation with shaft 42 via a superior collar 61 and a superior pin 62. Collar 61 is preferably conical and hollow shaped and is placed in correspondence of screw 60 near the lower end of sleeve 46. That is to say that when shaft 42 rotates for a determined amount also screw rotates of the same amount.

Screw 60 comprises a main cylindrical hollow body from which leans out laterally a screw shaped profile which covers the whole hight of screw 60. Preferably, screw profile has rectangular shape and dimensions so that it is contained into tube 34 without touching the inner wall of same tube 34.

A second flange 66 is associated to the first flange 32 by removable means 68, for example by bolts, and sealing means 67, for example a circular shaped gasket. In the same way, a protective cover 70 is associated to the second flange 66 by removable means 72, for example by screws. Over the protective cover 70, is associated a first gearmotor 38, which thus results to be constrained in position respect the first flange 32.

Between sleeve 46 and the second flange 66 are placed a first bearing 74 and a second bearing 76, preferably both oblique ball bearing type. Between first bearing 74 and second bearing 76 is advantageously placed a spacer 78. A blocking ring 80, preferably screwed up to the superior end of sleeve 46, pushes the first bearing 74. Such double bearing system has the advantage to keep sleeve 46 and shaft 42 aligned and separated, in order to avoid contact and/or rubbing. Below bearing 74 and 76, are placed also other bearings, visible in figure, respectively placed between sleeve 46 and the second flange 66 and between sleeve 46 and shaft 42.

Above described superior bearings set is included in means for rotation decoupling which are placed between screw 60 and tube 34.

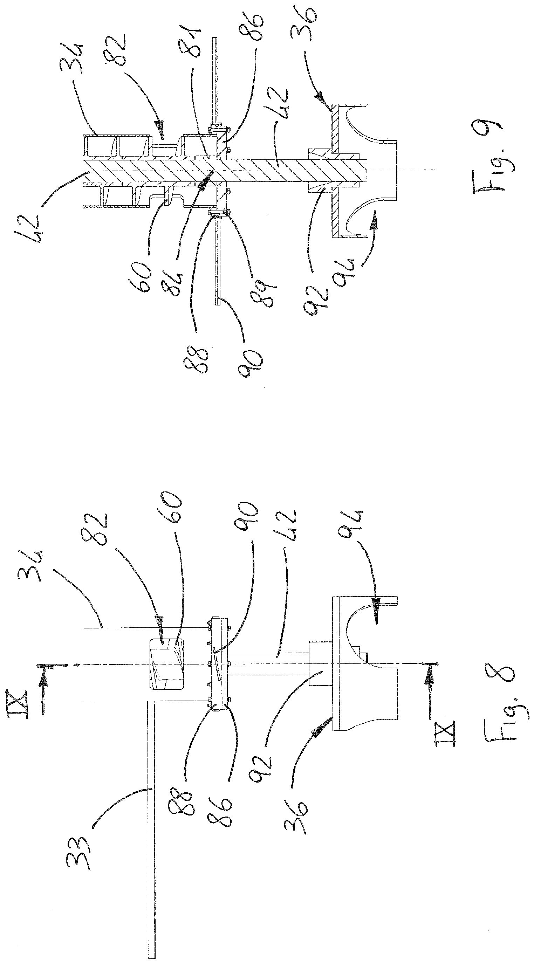

With reference to figure 8 and 9, it is following described the inferior portion of column 30 and its components.

Towards the inferior end of tube 34 an inferior mouth 82 is present. It has the shape of holes crossing the wall of tube 34, preferably made on two round shaped sectors, both having angle less than 90°. Preferably the two holes are symmetrically faced each other with respect to the symmetry axis of tube 34.

Screw 60 results to be constrained in rotation with shaft 42 by means of an inferior collar 81 and of an inferior pin 84. The inferior collar 81 is preferably cylindrical hollow shaped and it holds the screw 60.

A round shape plate 86 is associated to the inferior end of tube 34 via an inferior ring 88. The plate 86 is associated to inferior ring 88 by removable means 89, for example by bolts. An helix 90, comprising two blades which leans out in opposite directions, leans out from inferior ring 88.

Advantageously, rotations of tube 34 of inferior ring 88, of round shape plate 86 and of helix 90 are constrained together by proper means, in order to rotate as a single piece. Moreover, such components are free from rotation of shaft 42 and can rotate independently from rotation of shaft 42.

Inferior end of shaft 42 is inserted inside an inferior bearing 92, for example a bushing or a rubbing bearing, to allow the shaft 42 to rotate independently from terminal 36. In fact the inferior bearing 92 is placed between the shaft 42 and the terminal 36 in order to decouple the correspondent rotations. A screw 60, pivoted in the terminal 36, is thus obtained.

Inside terminal 36 are present three windows 94 to allow resin flow towards the conduit 26. In fact, although terminal 36 covers the conduit 26, presence of one or more windows 94 allows the connection between the portion of resin next to the conduit 29 and the portion of resin within the rest of volume of tank 10.

In the following example, it is described how the tank 10 works in a case where the resin is filled up at least to the inferior mouth 82.

Thanks to proper control means, sensors and other devices, the resin temperature inside tank 10 is monitored and other parameters useful to a good functioning.

The resin deaeration inside tank 10 can be obtained advantageously in different ways.

Control means drive the first gearmotor 38 to rotate shaft 42 according to a specific first rotation, thus driving the rotation of screw 60. The screw 60 consequently captures the resin and makes it rising inside tube 34 up to the superior mouth 52.

The resin can go out of tube 34 on the first bell 64 and immediately after on the second bell 15. From the second bell 15, the resin falls down on the resin below stored in the tank creating a thin film and obtaining a deaeretion by thin film lamination.

The specific shape of the first bell 64 and of the second bell 15 allows the creation of a surface of resin thin film wider than the one obtainable by the known technology.

When the control means drive also the second gearmotor 40, via the first pulley 44, the tube 34 is driven to rotate according to a proper rotation. It consequently rotates also the first bell 64. Such second rotation of the first bell 64, allows to obtain a wider total lamination surface thanks to the break between the first bell 64 and the second bell 15. A better and quicker resin deaeration is thus obtained.

A resin deaeration effect is obtained also thanks to the rotation of blades 33 and/or of helix 90, since a circular radial upward movement is created. This allows gasses extraction through the surface of resin head.

Advantageously, the presence of helix 90 allows to obtain a deaeration effect as well as a thermoregulation effect when the resin quantity is very low, for example when the resin level is lower than the inferior mouth 82. That is to say , when the screw 60 is not able to capture the resin from the lower mouth 82, helix 90 is able to provide a deaeration and/or a thermoregulation of the resin stored in the tank 10.

It is evident how the first rotation in combination with the second rotation, allows a resin deaeration better and quicker than the one obtained through a first rotation only.

Resin thermoregulation comprises the use of external jacket 18 as a source of heat, since it radiates the heat towards the inner part of tank 10.

The action of second rotation of tube 34 and consequently of the blade 33 allows the radial and/or longitudinal circulation of resin and breaks the thermal stratification in the middle longitudinal portions between the heating jacket and the central axis of tank 10.

The entity of resin motion generated by longitudinal component of push caused by the blade 33 is much bigger, both in module and direction, respect the longitudinal component generated by screw 60. Regarding the effect on temperature distribution, the component of blade 33 results more effective than the screw 60.

Advantageously, the flow of fluid inside jacket 18 and the effect of second rotation of blade 33 are driven countercurrent, so that the resin movement respect the circulation of fluid inside the jacket 18 helps the heat exchange. In other words, taking into account the view from top of tank 10, if the second rotation of blade 33 is driven clockwise, advantageously the flow of fluid inside jacket 18 is driven counterclockwise or vice versa.

Moreover, the rotation of screw 60 generates a further vertical change of resin which allows the homogeneous distribution of temperature.

It is evident that, as described above for deaeration, also regarding thermoregulation, first rotation combined with second rotation allows a more stable and better thermoregulation respect what is achieved with known technology. An order of magnitude of rotation speed of blade 33 is about 10 to 50 rpm. An order of magnitude of speed rotation of screw 60 is up to 190 rpm.

Experimentally, with the rotation speeds as above described, the turnover of resin volume inside tank 10 obtained by screw 60 is two orders of magnitude less than the value obtained by rotation of blade 33, when considered in the same time range. That is to say that when the screw 60 achieves one complete turnover of resin volume, the blade 33 achieves around 100 complete volume turnovers.

As above explained, it is evident that present invention achieves scopes and advantages initially presented, since it is advantageously obtained a versatility that known tanks do not allow.

The use of first rotation in combination with the second rotation according to present invention, has proved the synergic effect, both for deaeration process and for thermoregulation process.

Further advantage is to have just one single device, having double transmission, which allows independent movements of the first rotation respect the second rotation and when necessary also contemporaneous.

The possibility to select independently and with variable speed the two transmissions allows an extreme flexibility of tank 10, with the contemporaneous optimization of deaeration and thermoregulation processes, adapting also partial resin load. Preferably it achieves maximum advantage with full load.

Moreover, the materials and equipment used for manufacturing present invention, as well as the shapes and dimensions of single components, could be even more suitable in relation with specific need.

## Claims

1. Storage tank (10) for impregnation resins, comprising a container (12,14,16) whose cylindrical wall (12) is surrounded by an external jacket (18), which jacket defines a channel (20) which runs the external surface of the wall (12) as a spiral to allow circulation of a primary fluid, a vertical screw (60) contained in a tube (34), and a lamination bell (15,64) projecting from an upper part of the tube (34), said screw (60) being moved in rotation by first means of rotation (38), wherein the tube (34) is rotatable and movable in rotation by second rotation means (40) different from those that rotate the screw (60), so that the screw (60) can be moved according to a first rotation and the tube (34) can be moved according to a second rotation, said first rotation and said second rotation being independent of each other, **characterized in that** an upper mouth (52) is formed in the tube (34), the lamination bell comprising a first bell (64) and a second bell (15), said first bell (64) being associated to the tube (34) below the upper mouth (52) and said second bell (15) being associated to the container (12,14,16) by means of a frame (13), the first bell (64) and the second bell (15) respectively comprising a first sector (17,63) and a second sector (19,65), between them circumferentially spaced by a predetermined distance (21,69), the tank further including at least two blades (33) which develops radially from the tube (34) which tube contains the screw (60), said blades (33) rotating integral with the tube (34), and the blades being arranged radially opposing and offset along the entire height of the tube (34).

2. Storage Tank (10) in accordance with claim 1, wherein the first rotation means comprise a first geared motor (38) and are adapted to control the first rotation of the screw (60) directly, while the second rotation means (40) comprise a second geared motor (40) and are adapted to control the second rotation of the second tube (34) via a belt-pulleys transmission (44,45,47), said geared motors (38,40) being of variable speed type.

3. Storage tank (10) in accordance with claim 1 or 2, wherein the first rotation is transmitted to the screw (60) by means of a shaft (42), while the second rotation of the tube (34) is transmitted through rotation of a plurality of elements, comprising:
- a first pulley (44);
- a sleeve (46) associated with the first pulley (44) at an upper end of said sleeve (46);
- a ring (48) associated with a lower end of the sleeve (46) and to an upper end of the tube (34);
said first pulley (44), sleeve (46) and ring (48) being arranged around the shaft (42), in series from the top to the bottom and integral in rotation between them.

4. Storage tank (10) in accordance with one of the preceding claims, wherein a lower mouth (82) is formed in the tube (34) and wherein a propeller (90) is associated to the tube (34) itself, below said lower mouth (82).

5. Storage tank (10) in accordance with one of the preceding claims, wherein a conduit (26) extends below from said storage tank (10), said conduit (26) being for the passage of the resin, and wherein is included a terminal (36) in which the screw (60) is pivoted, said terminal (36) covering the conduit (26) and at least one window (94) is formed in said terminal (36), said window (94) to allow the passage of the resin between the inside of the tank (10) and the conduit (26) and vice versa.

6. Storage tank (10) in accordance with claim 5, in which are included rotation decoupling means interposed between the screw (60) and the tube (34), said rotation decoupling means comprising upper bearings (74,76) in the upper portion of the storage tank (10) and a lower bearing (92) associated with the terminal (36) in the lower portion of the tank (10).

## Patentansprüche

1. Aufbewahrungsbehälter (10) für Imprägnierungs-Kunststoffe, der einen Behälter (12, 14, 16), dessen zylindrische Wand (12) von einer äußeren Ummantelung (18) umschlossen ist, wobei die Ummantelung einen Kanal (20) bildet, der als eine Spirale an der Außenfläche der Wand (12) entlang verläuft und Zirkulation eines primären Fluids ermöglicht, eine vertikale Schnecke (60), die in einer Röhre (34) aufgenommen ist, sowie eine Schichtbildungs-Glocke (15, 64) umfasst, die von einem oberen Teil der Röhre (34) vorsteht, die Schnecke (60) mittels einer ersten Dreh-Einrichtung (38) in Drehung bewegt wird, wobei die Röhre (34) durch eine zweite Dreh-Einrichtung (40), die sich von derjenigen unterscheidet, die die Schnecke (60) dreht, gedreht werden und in Drehung bewegt werden kann, so dass die Schnecke (60) entsprechend einer ersten Drehung bewegt werden kann und die Röhre (34) entsprechend einer zweiten Drehung bewegt werden kann, wobei die erste und die zweite Drehung unabhängig voneinander sind, **dadurch gekennzeichnet, dass** eine obere Öffnung (52) in der Röhre (34) ausgebildet ist, die Schichtbildungs-Glocke eine erste Glocke (64) sowie eine zweite Glocke (15) umfasst, die erste Glocke (64) mit der Röhre (34) unterhalb der oberen Öffnung (52) verbunden ist und die zweite Glocke (15) über einen Rahmen (13) mit dem Behälter (12, 14, 16) verbunden ist, die erste Glocke und die zweite Glocke (15) einen ersten Sektor (17, 63) bzw. einen zweiten Sektor (19, 65) umfassen, die um einen vorgegebenen Zwischenraum (21, 69) zwischen ihnen beabstandet sind, wobei der Behälter des Weiteren wenigstens zwei Flügel (33) enthält, die sich radial von der Röhre (34) aus erstrecken, die Röhre die Schnecke (60) aufnimmt, sich die Flügel (33) integral mit der Röhre (34) drehen und die Flügel einander radial gegenüberliegend und über die gesamte Höhe der Röhre (34) versetzt angeordnet sind.

2. Aufbewahrungsbehälter (10) nach Anspruch 1, wobei die erste Dreh-Einrichtung einen ersten Getriebemotor (38) umfasst und so eingerichtet ist, dass sie die erste Drehung der Schnecke (60) direkt steuert, während die zweite Dreh-Einrichtung (40) einen zweiten Getriebemotor (40) umfasst und so eingerichtet ist, dass sie die zweite Drehung der zweiten Röhre (34) über ein Riemen-Scheiben-Getriebe (44, 45, 47) steuert, und die Getriebemotoren (38, 40) vom Typ mit veränderlicher Drehzahl sind.

3. Aufbewahrungsbehälter (10) nach Anspruch 1 oder 2, wobei die erste Drehung mittels einer Welle (42) auf die Schnecke (60) übertragen wird, während die zweite Drehung der Röhre (34) über Drehung einer Vielzahl von Elementen übertragen wird, die umfassen:
- eine erste Riemenscheibe (44);
- eine Buchse (46), die mit der ersten Riemenscheibe (44) an einem oberen Ende der Buchse (46) verbunden ist;
- einen Ring (48), der mit einem unteren Ende der Buchse (46) und einem oberen Ende der Röhre (34) verbunden ist;
wobei die erste Riemenscheibe (44), die Buchse (46) und der Ring (48) der Reihe nach von oben nach unten um die Welle (42) herum angeordnet sind und sich integral miteinander drehen.

4. Aufbewahrungsbehälter (10) nach einem der vorangehenden Ansprüche, wobei eine untere Öffnung (82) in der Röhre (34) ausgebildet ist und ein Propeller (90) unterhalb der unteren Öffnung (82) mit der Röhre (34) selbst verbunden ist.

5. Aufbewahrungsbehälter (10) nach einem der vorangehenden Ansprüche, wobei sich eine Leitung (26) von dem Aufbewahrungsbehälter (10) aus unterhalb davon erstreckt, die Leitung (26) zum Durchlassen des Kunststoffs dient und ein Endteil (36) vorhanden ist, in dem die Schnecke (60) drehbar gelagert ist, wobei das Endteil (36) die Leitung (26) abdeckt und wenigstens ein Ausschnitt (94) in dem Endteil (36) ausgebildet ist, wobei der Ausschnitt (94) den Durchlass des Kunststoffs zwischen dem Innenraum des Behälters (10) und der Leitung (26) und umgekehrt ermöglicht.

6. Aufbewahrungsbehälter (10) nach Anspruch 5, in dem eine Drehungs-Entkopplungseinrichtung enthalten ist, die zwischen der Schnecke (60) und der Röhre (34) angeordnet ist, wobei die Drehungs-Entkopplungseinrichtung obere Lager (74, 76) in dem oberen Abschnitt des Aufbewahrungsbehälters (10) sowie ein unteres Lager (92), das mit dem Endteil (36) verbunden ist, in dem unteren Abschnitt des Behälters (10) umfasst.

## Revendications

1. Réservoir de stockage (10) pour résines d'imprégnation, comprenant un récipient (12, 14, 16) dont une paroi (12) cylindrique est entourée d'une chemise externe (18), laquelle chemise définit un canal (20) qui s'étend en spirale sur une surface extérieure de la paroi (12) pour autoriser une circulation d'un fluide primaire, une vis verticale (60) contenue dans un tube (34) et une cloche de stratification (15, 64) faisant saillie depuis une partie supérieure du tube (34), ladite vis (60) étant déplacée en rotation par un premier moyen de rotation (38), dans lequel le tube (34) peut tourner et peut être déplacé en rotation par un second moyen de rotation (40) différent de celui qui fait tourner le vis (60), de sorte que la vis (60) puisse être déplacée selon une première rotation et que le tube (34) puisse être déplacé selon une seconde rotation, ladite première rotation et ladite seconde rotation étant indépendantes l'une de l'autre, **caractérisé en ce qu'** une ouverture supérieure (52) est formée dans le tube (34), la cloche de stratification comprend une première cloche (64) et une seconde cloche (15), ladite première cloche (64) étant associée au tube (34) en dessous de l'ouverture supérieure (52) et ladite seconde cloche (15) étant associée au récipient (12, 14, 16) au moyen d'un cadre (13), la première cloche (64) et la seconde cloche (15) comprenant respectivement un premier secteur (17, 63) et un second secteur (19, 65), espacés entre eux de manière circonférentielle d'une distance prédéterminée (21, 69), le réservoir comprenant en outre au moins deux limbes (33) qui se développent radialement à partir du tube (34), lequel tube contient la vis (60), lesdits limbes (33) tournant de manière solidaire du tube (34), et les limbes étant radialement opposés et décalés sur toute la hauteur du tube (34).

2. Réservoir de stockage (10) selon la revendication 1, dans lequel le premier moyen de rotation comprend un premier moteur à engrenage (38) et est adapté pour commander directement la première rotation de la vis (60), tandis que le second moyen de rotation (40) comprend un second moteur à engrenages (40) et est adapté pour commander la seconde rotation du second tube (34) via une transmission à poulies-courroies (44, 45, 47), lesdits moteurs à engrenages (38, 40) étant du type à vitesse variable.

3. Réservoir de stockage (10) selon la revendication 1 ou 2, dans lequel la première rotation est transmise à la vis (60) au moyen d'un arbre (42), tandis que la seconde rotation du tube (34) est transmise par la rotation d'une pluralité d'éléments, comprenant:
- une première poulie (44);
- un manchon (46) associé à la première poulie (44) au niveau d'une extrémité supérieure dudit manchon (46);
- un anneau (48) associé à une extrémité inférieure du manchon (46) et à une extrémité supérieure du tube (34) ;
ladite première poulie (44), ledit manchon (46) et ledit anneau (48) étant disposés autour de l'arbre (42), en série du haut vers le bas et solidaires en rotation entre eux.

4. Réservoir de stockage (10) selon l'une des revendications précédentes, dans lequel une ouverture inférieure (82) est formée dans le tube (34) et dans lequel une hélice (90) est associée au tube (34) lui-même, en-dessous de ladite ouverture inférieure (82).

5. Réservoir de stockage (10) selon l'une des revendications précédentes, dans lequel un conduit (26) s'étend en-dessous dudit réservoir de stockage (10), ledit conduit (26) servant au passage de résine, et dans lequel est incluse une borne (36) dans laquelle la vis (60) est tournée, ladite borne (36) recouvrant le conduit (26) et au moins une fenêtre (94) est formée dans ladite borne (36), ladite fenêtre (94) permettant le passage de la résine entre l'intérieur du réservoir (10) et le conduit (26) et inversement.

6. Réservoir de stockage (10) selon la revendication 5, dans lequel est inclus un moyen de découplage en rotation interposés entre la vis (60) et le tube (34), ledit moyen de découplage en rotation comprenant des paliers supérieurs (74, 76) dans la partie supérieure du réservoir de stockage (10) et un palier inférieur (92) associé à la borne (36) dans la partie inférieure du réservoir (10).
